# EUROPÄISCHE PATENTSCHRIFT

(11) **EP 3 173 195 B1**
(45) Veröffentlichungstag und Bekanntmachung des Hinweises auf die Patenterteilung: **07.06.2023**
(21) Anmeldenummer: 16201273.6
(22) Anmeldetag: 29.11.2016
(51) Int. Cl.: B25J 13/08, B25J 15/02, B25J 15/12, B66C 1/44, B66C 13/46

(54) **HALTEELEMENT UND BAUSTOFFGREIFERANORDNUNG MIT EINEM SOLCHEN**
HOLDING ELEMENT AND MATERIAL GRIPPER ASSEMBLY COMPRISING SAME
ÉLÉMENT DE MAINTIEN ET PRÉHENSEUR DE MATÉRIAU LE COMPRENANT

(30) Priorität: 30.11.2015 DE 102015223627
(43) Veröffentlichungstag der Anmeldung: 31.05.2017
(73) Patentinhaber: Renz Beteiligungs GmbH, 86551 Aichach (DE)
(72) Erfinder: RENZ, Michael, 86551 Aichach (DE); RENZ, Stefan, 86551 Aichach (DE)
(74) Vertreter: MFG Patentanwälte Meyer-Wildhagen Meggle-Freund Gerhard PartG mbB

(56) Entgegenhaltungen:
- CN-U- 203 380 896
- DE-A1-102009 021 558
- DE-B3-102014 107 538
- JP-A- H07 277 535
- JP-A- 2002 355 786
- US-A1- 2006 028 041
- US-A1- 2006 042 911
- US-A1- 2014 238 825

## Beschreibung

### TECHNISCHES GEBIET

Die vorliegende Offenbarung bezieht sich allgemein und insbesondere auf ein Halteelement mit einem Laschenkörper mit einem Befestigungsbereich, an dem der Laschenkörper an einer Trägervorrichtung fixierbar ist, und einem Haltebereich, über den eine Haltekraft auf einen zu haltenden Gegenstand aufbringbar ist, sowie auf eine Greiferanordnung, insbesondere eine Baustoffgreiferanordnung, mit einem solchen Halteelement.

### TECHNISCHER HINTERGRUND

Es sind allgemein laschenförmige Halteelemente für Greiferanordnungen bekannt, die beispielsweise dazu dienen, automatisiert Baustofflagen zu handhaben. Die Halteelemente werden dabei in verstellbaren Greiferanordnungen verwendet, die beispielsweise bei Herstellungsprozessen solcher Baustoffelemente verwendet werden (zum Beispiel in Ziegeleien), um im Fertigungsprozess mehrere Baustoffelemente aufzunehmen und umzusetzen. Die Greiferanordnung, die dazu beispielsweise an einem Roboterarm befestigt ist, übergreift dabei eine Reihe oder auch eine Lage (mit mehreren kompakt nebeneinander angeordneten Reihen) solcher Baustoffelemente und legt über einen Verstellmechanismus die in zwei leistenartigen Halteelementanordnungen zusammengefassten Halteelemente mit ihrem Befestigungsbereich an Seitenflächen der Baustoffelemente an. Die Greiferanordnung wird dabei in eine Haltestellung verstellt, in der zwischen den Baustoffelementen und den Halteelementen eine Haltekraft wirkt, die so groß ist, dass eine, insbesondere reibschlüssige, Kopplung zwischen den Halteelementen und den Baustoffelementen erreicht wird, so dass in dieser Stellung die Baustoffelemente (eine Reihe oder eine komplette Lage) mit der Greiferanordnung aufgenommen werden kann und von einer Stelle zur anderen umgesetzt werden können.

Die Halteelemente werden dabei hoch beansprucht und sind insbesondere empfindlich gegen Beanspruchungen, die in anderen Richtungen verlaufen als der Verlauf der Haltekraft bei sachgemäßem Einsatz. Beim sachgemäßen Einsatz wird der Laschenkörper üblicherweise quer zur Länge bzw. zur Breite der Lasche beansprucht - also im Wesentlichen senkrecht zu den Flachseiten der Lasche. In dieser Beanspruchungsrichtung haben die meist aus Stahlwerkstoffen gefertigten Laschen eine bestimmte Biegeelastizität, so dass sich die Laschen gleichmäßig flach an die zu handhabenden Objekte anlegen. Kommt es zu Stauchungen und Verformungen der Laschenelemente, so wird die Kraft nicht gleichmäßig an allen Baustoffelementen aufgebaut. Dies kann dazu führen, dass einzelne Laschen überlastet werden oder auch, dass einzelne Baustoffelemente nicht zuverlässig erfasst werden.

Die aufgebaute Kraft ist ungleichmäßig und unter Umständen bereichsweise zu gering, um einen sicheren Halt zu gewährleisten. Zum anderen sind die verwendeten Stahllaschen relativ schwer, so dass schwer dimensionierte Verstelleinrichtungen und Handhabungseinrichtungen erforderlich sind, um die Greiferanordnung selbst und zusätzlich die Baustoffelemente umzuschlagen. So eine Greiferanordnung ist z.B. aus der DE 23 32 293 A1 bekannt. Ein formschlüssig wirkender Transportrahmen (Greiferanordnung) ist aus der GB 2 402 923 B bekannt. Halteklammern aus FVK-Werkstoffen mit formstabilen Greifarmen für Gefäße sind aus der EP 1 868 746 B1 bekannt.

DE 10 2014 107 538 B3 offenbart einen Greifarm zum Führen und Halten von insbesondere flaschenartigen Behältern, der aus einem faserverstärkten Kunststoff mit hoher Steifigkeit ausgebildet sein kann. JP H07 277535 A zeigt elastisch verformbare Greiffinger mit einem gleichförmigen Schaft. US 2006 028041 offenbart einen flexiblen Greiferfinger aus Polypropylen, der pneumatisch betätigt wird.

Aufgabe ist es daher, verbesserte Halteelemente zur Verfügung zu stellen, bei denen diese Nachteile wenigstens teilweise beseitigt sind. Ein weiteres Ziel kann darin gesehen werden, eine verbesserte Baustoffgreiferanordnung bereitzustellen.

### ZUSAMMENFASSUNG

Nach einem ersten Aspekt, zeigt die vorliegende Offenbarung ein Halteelement mit einem Laschenkörper mit einem Befestigungsbereich, an dem der Laschenkörper an einer Trägervorrichtung fixierbar ist und einem Haltebereich, über den eine Haltekraft auf einen zu haltenden Gegenstand aufbringbar ist, wobei der Laschenkörper aus einem plattenförmigen (flachen) FVK-Werkstoff (faserverstärkter Kunststoff) ausgebildet ist und zwischen dem Befestigungsbereich und dem Haltebereich ein Biegebereich ausgebildet ist, in dem der Laschenkörper bei auf den zu haltenden Gegenstand aufgebrachter Haltekraft elastisch verformbar ist, wobei der Biegebereich gegenüber dem Befestigungsbereich und/oder dem Haltebereich eine reduzierte Biegesteifigkeit aufweist. Nach einem weiteren Aspekt betrifft die vorliegende Erfindung eine Greiferanordnung, insbesondere eine Baustoffgreiferanordnung zum Umschlagen einer Baustoffelementlage bzw. -reihe mit wenigstens einem Haltelement, das die vorstehend angegebenen Eigenschaften aufweist.

Weitere Aspekte und Merkmale ergeben sich aus den abhängigen Ansprüchen, der beigefügten Zeichnung und der nachfolgenden Beschreibung von Ausführungsformen.

### KURZBESCHREIBUNG DER ZEICHNUNG

Ausführungsformen werden nun beispielhaft und unter Bezugnahme auf die beigefügte Zeichnung beschrieben. Dabei zeigt:
- Fig. 1A: eine Seitenansicht eines ersten Ausführungsbeispiels eines erfindungsgemäßen, laschenförmigen Halteelements;
- Fig. 1B: eine Vorderansicht des in Fig. 1A dargestellten Halteelements;
- Fig. 2: eine erstes Ausführungsbeispiel einer erfindungsgemäße Baustoffgreiferanordnung mit mehreren erfindungsgemäßen Halteelementen gemäß einem zweiten Ausführungsbeispiel;
- Fig. 3: eine Teilschnittdarstellung eines Längsschnitts im Bereich Ader Fig. 1A;
- Fig. 4A: eine schematisierte Darstellung eines zweiten Ausführungsbeispiels einer erfindungsgemäßen Baustoffgreiferanordnung;
- Fig. 4B: eine schematisierte Darstellung eines dritten Ausführungsbeispiels einer erfindungsgemäßen Baustoffgreiferanordnung;
- Fig. 4C: eine schematisierte Darstellung eines vierten Ausführungsbeispiels einer erfindungsgemäßen Baustoffgreiferanordnung;
- Fig. 5: ein weiteres Ausführungsbeispiel eines erfindungsgemäßen Halteelements und
- Fig. 6A bis 7B: noch ein weiteres Ausführungsbeispiel eines erfindungsgemäßen, gekröpften Halteelements in unterschiedlichen Betriebs-, bzw. Kollisionszuständen.

### BESCHREIBUNG VON AUSFÜHRUNGSFORMEN

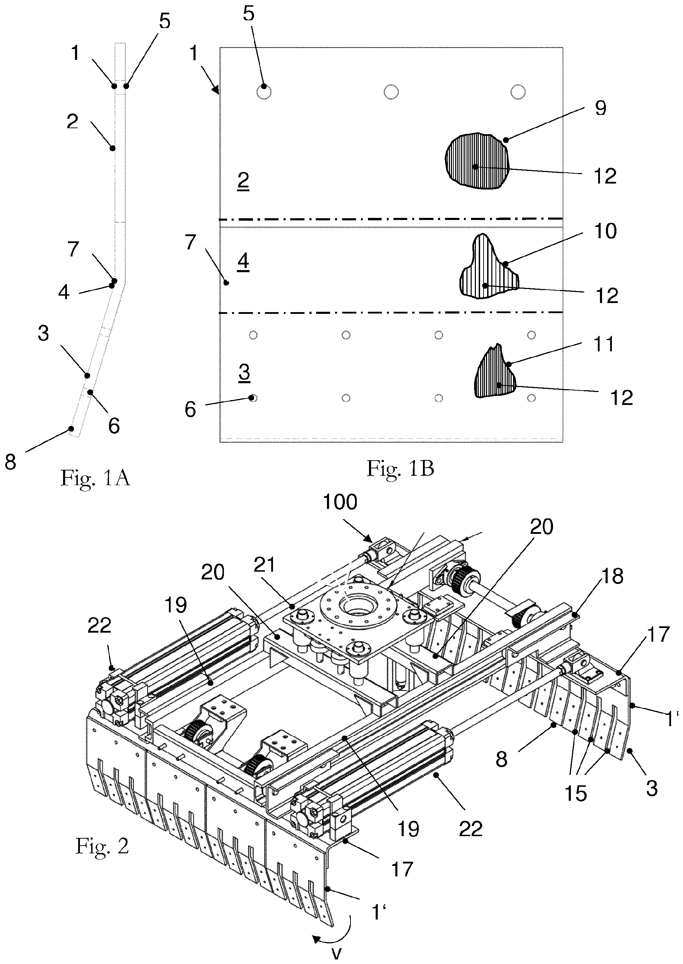

Vor einer detaillierten Beschreibung der Ausführungsform unter Bezugnahme auf Fig. 1 folgen zunächst allgemeine Erläuterungen zu den Ausführungsformen.

Ein Halteelement, dessen Laschenkörper aus einem plattenförmigen FVK-Werkstoff ausgebildet ist, weist gegenüber einem metallischen Laschenkörper, insbesondere einem Laschenkörper aus Stahl, zum einen erhebliche Gewichtsvorteile auf und zum anderen kann die zum dosierten und kontrollierten Aufbringen der Haltekraft erforderliche Flexibilität und Elastizität wesentlich genauer eingestellt werden. Weiterhin kann die Haltekraft, die jeweils über den Laschenkörper bzw. über den Haltebereich des Laschenkörpers aufgebracht wird, bei der Anordnung mehrerer unabhängiger Laschen sehr konsistent und wiederholgenau bei jeder Lasche aufgebracht werden, da sich einzelne Laschen im Betrieb nicht plastisch verformen können. Elemente aus plattenförmigen FVK-Werkstoffen haben sehr gute biegeelastische Eigenschaften quer zur Faserrichtung und gleichzeitig bei Belastungen in Faserrichtung eine sehr hohe Steifigkeit. Haltelement (1; 1', 1a, 1b) mit einem aus einem plattenförmigen FVK-Werkstoff ausgebildeten Laschenkörper mit einem an einer Flachseite des Laschenkörpers ausgebildeten Befestigungsbereich (2) an dem der Laschenkörper an einer Trägervorrichtung (17) fixierbar ist und einem an der Flachseite ausgebildeten Haltebereich (3), über den eine Haltekraft auf einen zu haltenden Gegenstand aufbringbar ist, wobei zwischen dem Befestigungsbereich (2) und dem Haltebereich (3) ein Biegebereich (4) ausgebildet ist, in dem der Laschenkörper bei auf den zu haltenden Gegenstand aufgebrachter Haltekraft elastisch verformbar ist.

Insbesondere haben solche faserverstärkten Kunststoffe mit langen, gerichteten Fasern - sogenannte Hochleistungsverbundkunststoffe - besonders wünschenswerte mechanische Eigenschaften.

Durch den Aufbau des Kunststoffelements an sich, die Formgebung sowie die Gestaltung des Faserverlaufs im Werkstück können sehr differenzierte Werkstoff- und Bauteileigenschaften ausgebildet werden. Dabei bilden die Ausrichtung der Fasern, die Auswahl der Faserwerkstoffe, das Herstellen des Fasermatrixsystems sowie die Formgebung und das Aushärteverfahren eine Vielzahl von Einflussmöglichkeiten, die sich auf die Eigenschaften eines entsprechend angefertigten Laschenkörpers lokal und insgesamt auswirken. Als Fasern können Kurz-, Lang- und Endlosfasern sowie daraus hergestellte Folgeprodukte wie Matten, Gewebe, Vliese und Bänder verwendet werden. Insbesondere sind Glas-, Kohlenstoff- bzw. Aramidfasern geeignet, um in eine thermo- oder duroplastische Kunststoffmatrix eingebettet werden zu können.

Dabei weist der Biegebereich gegenüber dem Befestigungsbereich und/oder dem Haltebereich eine reduzierte Biegesteifigkeit auf. Damit kann eine Art "elastischer Scharnierbereich" geschaffen werden, in dem die elastische Verformung lokal begrenzt auftritt, während im Befestigungsbereich und im Haltebereich eine vergleichsweise hohe Steifigkeit realisiert werden kann.

Bei einer Ausführung ist die dabei reduzierte Biegesteifigkeit über eine reduzierte Wandstärke im Biegebereich realisiert. Dabei besteht die Möglichkeit, entweder den gesamten Biegebereich in seiner Wandstärke zu reduzieren oder lokal begrenzte Bereiche in der Wandstärke zu reduzieren, indem beispielsweise Vertiefungen und/oder entsprechende Rillen mit reduzierter Wandstärke vorgesehen werden.

In einer anderen Ausführung ist der Biegebereich bzw. die reduzierte Biegesteifigkeit im Biegebereich dadurch realisiert, dass in diesem Bereich ein reduzierter Faseranteil und/oder eine lokal bzw. global veränderte Faserstruktur vorgesehen ist. Anzahl und Verteilung der Fasern beeinflussen die Biegesteifigkeit eines FVK-Werkstückes erheblich. Die Fasern sind dabei quer zur Biegerichtung angeordnet und beeinflussen die Biegesteifigkeit beispielsweise dadurch, dass sie mehr oder weniger an der Oberfläche bzw. näher zur neutralen Faser angeordnet sind. Auch eine Reduzierung der Faserdichte kann zu einer erhöhten Biegeelastizität führen.

In einer anderen Ausführung ist zwischen dem Fixierbereich und dem Haltebereich eine Kröpfung ausgebildet, die insbesondere im Biegebereich verläuft, so dass der Fixierbereich zum Haltebereich geneigt angeordnet ist. Damit können zum einen ebenfalls die Biegeeigenschaften beeinflusst werden und zum anderen kann der Haltebereich so ausgebildet werden, dass eine Spannkante des Halteelements an dem zu haltenden Gegenstand angreift und dort - im Gegensatz zu einem flächigen Angriff - eine relativ hohe lokale Kontaktkraft aufbaut, die den Halt erhöht, indem die Haltekraft lokal im Spannkantenbereich auf den zu haltenden Gegenstand aufgebracht wird.

In einer anderen Ausführung ist das Halteelement aus einem Hochleistungsverbundkunststoff mit gerichteter Faserstruktur als Organoblech ausgebildet. Organobleche sind thermoplastisch verformbare Bauteile aus Endlosfaser-verstärktem Thermoplast. Solche vorgefertigten Thermoplast-Prepregs können in mechanisch-thermischen Formgebungsverfahren (z.B. thermisches Pressen) in beliebige Formen gebracht werden. Damit ist es möglich, die Halteelemente in effizienten Fertigungsverfahren wiederholgenau herzustellen.

Eine Baustoffgreiferanordnung zum Umschlag einer Baustoffelementlage mit wenigstens einem Haltelement nach einem der vorhergehenden Ansprüche kann wesentlich leichter ausgeführt werden und mit den oben dargestellten vorteilhaften Eigenschaften versehen werden. Der Begriff "Baustoffelementlage" soll hier sowohl ein- als auch mehrreihige Baustoffelementanordnungen umfassen, die mit einer solchen Greiferanordnung aufgenommen werden können.

Bei einer Ausführung ist dabei die Baustoffgreiferanordnung mit einer ersten und zweiten Halteelementanordnung versehen, die mittels einer Stellvorrichtung zwischen einer Halte- und einer Freigabestellung verstellbar sind, wobei in der Haltestellung über die Halteelemente durch deren elastische Verformung eine Haltekraft auf eine Baustoffanordnung ausgeübt wird, so dass Halteelement und Baustoffanordnung reib- und/oder formschlüssig gekoppelt sind. So eine Anordnung ist erstens funktional, da sie eine sichere Aufnahme und damit einen zuverlässigen Umschlag einer aufzunehmenden oder zu haltenden Baustofflage ermöglicht und zweitens wird die aufzubringende Haltekraft gleichmäßig auf alle Baustoffelemente einer Lage verteilt.

Bei anderen Ausführungen ist die Baustoffgreiferanordnung so ausgebildet, dass der Haltebereich des Halteelements über eine elastische Verformung der Baustoffgreiferanordnung selbst und insbesondere über eine elastische Verformung eines die Halteelemente verbindenden Biegeelements verstellbar ist. Über eine entsprechend angeordnete Stellvorrichtung kann so durch elastisches Verbiegen des Verbindungselementes, bspw. einer Quertraversenanordnung, und/oder elastische Verformung der Halteelemente oder auch einer Halteelementanordnung die Baustoffgreiferanordnung verstellt werden. Die Stellkraft kann dabei über einen oder mehrere Stellzylinder, andere geeignete Linearantriebe (Zahnstangen-, Spindelantriebe) oder auch Torsionsantriebe aufgebracht werden.

Bei einer Ausführung braucht dazu nicht die Halteelementanordnung selbst verstellt werden (räumlich versetzt werden) sondern es reicht eine elastische Verformung der Halteelemente, die durch entsprechende Stellelemente in ihre Freigabestellung gespannt werden - also aktiv über die Betätigung der Stellelemente. Bei Freigabe durch die Stellvorrichtung verformen sie sich dank ihrer Eigenelastizität in die Haltestellung und bauen dort die Haltekraft auf. Bei so einer Anordnung, die praktisch selbstsichernd ist, wird die Haltekraft aufgebaut und gehalten, ohne dass dazu eine aktive Betätigung eines Stellelementes erforderlich wäre.

In einer anderen Ausführung kann der Mechanismus auch umgekehrt ablaufen. Hier wird die Haltestellung durch eine elastische Verformung der Halteelemente eingestellt, indem diese durch die Stellvorrichtung in die Haltestellung "gespannt" werden. Bei so einer Ausführung kann beispielsweise das sichere Beibehalten der Haltestellung erreicht werden, indem die Stellvorrichtung aktiv in die Freigabestellung gebracht werden muss (beispielsweise durch einen Fluiddruckaufbau oder durch einen elektrischen Antrieb, während sie zum Beispiel über eine Federkraft ohne Aktivierung in die Haltestellung fällt.

Die Greiferanordnungen sind insbesondere als Baustoffgreiferanordnungen ausgebildet, sie könne aber auch als Greiferanordnungen für andere Transport-/Umschlagstücke ausgebildet sein, die einzeln oder lagenweise umgeschlagen oder umgesetzt werden sollen. Dies können z.B. Werkstücke, Halbzeuge, Packeinheiten oder ähnliches sein.

Es gibt Ausführungen, bei denen eine Sensoranordnung mit wenigstens einem der Halteelemente - optional auch mit einem andere Bauteil der Greiferanordnung - zusammenwirkt, die dazu eingerichtet ist eine kollisionsbedingte und/oder eine betriebsbedingte Verformung des Halteelements zu erfassen. Damit können auf einfache Art und Kollsionszustände erfasst und vermieden werden.

Dabei kann die Sensoranordnung einen Sensor aus der Gruppe folgender Sensoren umfassen: Schalter, Kontaktsensor, Näherungssensor, Verformungssensor, Dehnungsmessstreifen, Kraftmesssensor.

Eine solche Sensoranordnung kann daher sowohl eine kollisionsbedingte als auch eine betriebsbedingte Verformung des Halteelements 1c erfassen. Insbesondere das schnelle Erfassen einer kollisionsbedingten Verformung verhindert eine Beschädigung der Baustoffgreiferanordnung 100 und damit insbesondere auch der Haltelemente 1c.

Dies kann entweder durch Sensoranordnungen mit mehreren Sensoren erfolgen, die an unterschiedlichen Orten angeordnet sind, oder durch Einzelsensoren die abhängig von einem Signalpegel betriebsbedingte (normale) oder kollisionsbedingte (außerordentliche) Verformungen der Halteelemente anzeigen. Der oder die Sensoren können dazu an den Halteelementen selbst und/oder an belasteten Bauteilen der Greiferanordnung angeordnet sein.

Zurückkommend zu Fig. 1A und 1B, zeigen diese eine erste Ausführungsform eines erfindungsgemäßen Halteelements 1, das leicht gekröpft ausgebildet ist. Fig. 1A zeigt eine Seitenansicht und Fig. 1B eine Ansicht von vorne. Das Halteelement umfasst einen Befestigungsbereich 2, einen Haltebereich 3 sowie einen dazwischen verlaufenden Biegebereich 4. Die Trennung zwischen den Bereichen ist in Fig. 1B durch zwei strichpunktierte Linien angedeutet. Dies ist jedoch nicht so zu verstehen, dass die Trennung zwischen den Bereichen tatsächlich trennscharf entlang dieser Linien verläuft, sondern es kann auf beiden Seiten der strichpunktierten Linien jeweils in die Bereiche hineinragend ein Übergangsbereich ausgebildet sein, in dem sich der Befestigungsbereich 2 allmählich in den Biegebereich 4 und dieser wieder weiter in den Haltebereich 3 erstreckt. Die Wirkflächen im Befestigungs- und Haltebereich 2, 3 verlaufen jeweils entlang einer Flachseite des platten- bzw. scheibenförmigen Haltelements 1. Die wirksamen Halte-, Befestigungs- und Biegekräfte wirken etwa senkrecht zu diesen Wirkflächen.

Im Befestigungsbereich 2 sind mehrere Bohrungen 5 vorgesehen, mit denen das Halteelement 1 an einer entsprechenden Trägerstruktur (siehe Fig. 2) befestigt werden kann. Im Haltebereich 3 sind ebenfalls Bohrungen vorgesehen, über die beispielsweise (nicht dargestellte) Halteelemente befestigbar sind (z.B. Haltebacken oder -kissen), die beispielsweise auf die Oberflächenstruktur und das Material der zu haltenden Gegenstände abgestimmt sein können.

Im Biegebereich 4 verläuft ein Knick 7 (entlang der gestrichelten Linie in Fig. 1B), so dass der Haltebereich gegenüber dem Befestigungsbereich geneigt ausgebildet ist. Damit entsteht am unteren Ende des Haltebereichs 3 eine Greifkante 8, über die gegebenenfalls lokal die Haltekraft auf den zu haltenden Gegenstand übertragen werden kann.

In Fig. 1B ist in Teilschnitten 9, 10 und 11 schematisch eine unterschiedliche Anordnung der im Inneren des Halteelementes 1 liegenden Fasern 12 dargestellt. Dabei zeigt es sich, dass die Faserstruktur in den Bereichen 9 und 11 dichter ist, während sie im Bereich 10, der innerhalb des Biegebereichs liegt, anders verteilt ist (hier weniger dicht), so dass hier eine höhere Biegeelastizität gewährleistet sein kann.

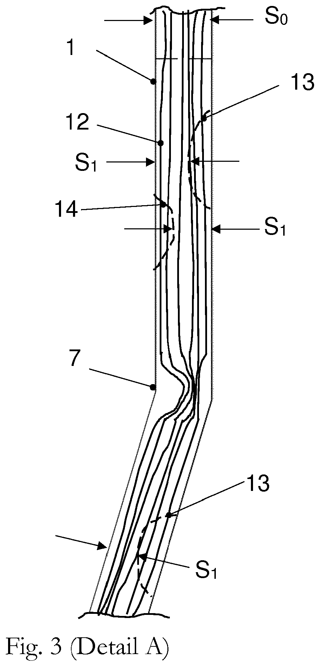

Dazu zeigt Fig. 3 weitere Alternativen in der Darstellung des in Fig. 1A dargestellten Bereiches A, der in Fig. 3 als Längsschnitt durch das Halteelement 1 gezeigt ist. Auch hier ist dargestellt, dass der Faserverlauf nicht homogen durch den Knick 7 verläuft, sondern in diesem Bereich die Fasern 12 dichter gebündelt sind, so dass hier im Bereich des Knicks 7, der im Biegebereich 4 liegt, eine höhere Biegeelastizität erzielt werden kann.

Alternativ können auch die gestrichelt dargestellten Rillen 13 (senkrecht zur Papierebene verlaufend) eine lokale Verschwächung im Biegebereich 4 bilden, und so als eine Art Scharnier dienen, in dem die Biegesteifigkeit im Biegebereich 4 herabgesetzt ist. Die reduzierte Wandstärke si ist in diesen Bereichen geringer als die Ausgangswandstärke so.

Alternativ ist es auch möglich, lokale Vertiefungen 14 oder Mulden mit reduzierter Wandstärke si im gesamten Biegebereich 4 zu verteilen, so dass hier eine höhere Biegeelastizität realisiert ist. Dabei können diese Rillen 13 oder Vertiefungen 14 entweder mechanisch in das fertige Bauteil 1 eingebracht (z.B. gefräst) werden, und dabei die Fasern 12 durchtrennt werden.

Es gibt aber auch Ausführungen, bei denen beispielsweise Rillen 13 und Vertiefungen 14 thermisch eingeformt (eingeprägt) werden und dabei die Fasern 12 nicht beschädigt, sondern nur in den Bereichen 13 und 14 verdrängt werden. Es gibt auch Ausführungen bei denen Bohrungen, die Biegeelastizität im Biegebereich 4 erhöhen.

Fig. 2 zeigt eine Baustoffgreiferanordnung 100 mit mehreren Halteelementen 1', die ähnlich dem Halteelement 1 ausgebildet sind, aber im Gegensatz zu diesem drei Einschnitte 15 aufweisen, so dass jedes Halteelement 1' mit vier Haltefingern 16 versehen ist. Die Halteelemente 1' sind jeweils an einer Winkelschiene 17 befestigt, die jeweils über zwei Rollenschuhe 18 in einer Führungsschiene 19 zueinander verschiebbar aufgenommen sind, so dass die aus den Winkelschienen 17 und den Halteelementen 1' gebildeten Halteelementanordnungen aufeinander zu und voneinander weg in den Führungsschienen 19 geführt sind.

Die Führungsschienen 19 sind dabei über zwei Quertraversen 20 miteinander verbunden und elastisch gedämpft mit einer Anschlussplatte 21 gekoppelt, über die die gesamte Greiferanordnung 100 beispielsweise mit einem Roboterarm (nicht dargestellt) oder einer anderen Umschlageinrichtung koppelbar ist. Die Verstellung der Winkelschienen 17 mit den Halteelementen 1' erfolgt durch zwei Stellzylinderanordnungen 22, über die die Halteelemente 1' zwischen ihrer Halte- und ihrer Freigabestellung verstellbar sind.

In der Haltestellung übergreift die Baustoffgreiferanordnung 100 mit den Halteelementen 1' eine nicht dargestellte Baustofflage, so dass die Haltebereiche 3 der Halteelemente 1 in den Bereich der entsprechenden Seitenflächen (Flanken) der Baustoffelemente geraten. Über die Stellzylinder 22 werden dann die Winkelschienen aufeinander zu bewegt, so dass die Haltekanten 8 der einzelnen Haltefinger 16 an den Baustoffelementen anliegen und dort eine Haltekraft aufbauen, die so groß ist, dass beim Anheben der Baustoffgreiferanordnung 100 alle Baustoffelemente zwischen den Halteelementen 1' fixiert sind, insbesondere form- und/oder reibschlüssig gekoppelt. Dabei verformen sich die Haltefinger 16 elastisch in Richtung V, indem sie sich im Biegebereich 4 elastisch verformen und so die Haltekraft allmählich und fein dosiert über die Stellzylinder 22 aufbaubar ist und ein flächiger Kontakt zwischen Baustoffelementen und den Halteelementen 1' besteht.

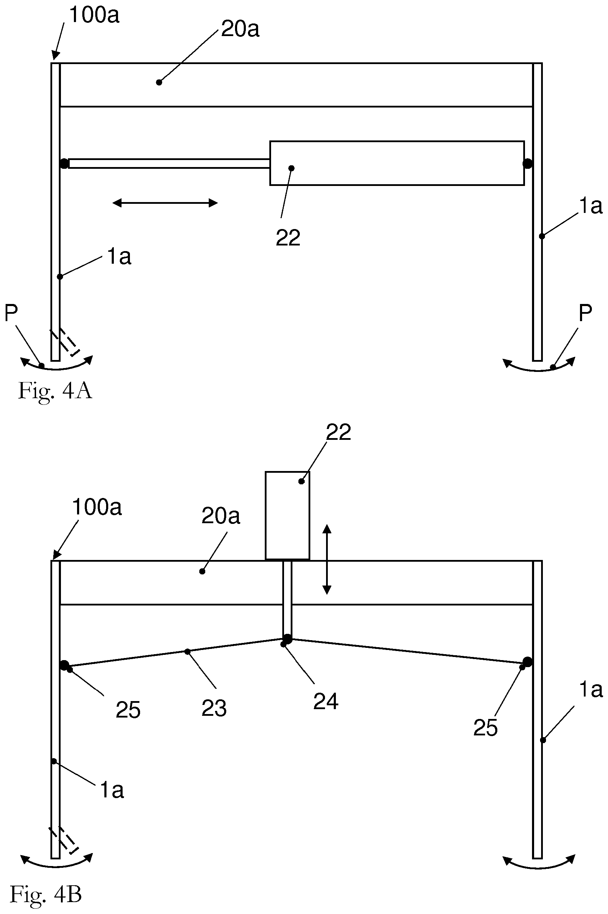

Fig. 4A zeigt schematisch den Aufbau einer Baustoffgreiferanordnung 100a, bei der eine starre, ggf. biegeelastische Quertraversenanordnung 20a vorgesehen ist, an der die Halteelemente 1a unverrückbar fixiert sind. Über einen Stellzylinder 22, der an seinen Enden jeweils mit den Halteelementen 1a gekoppelt ist, werden diese in Pfeilrichtung auseinandergedrückt oder zusammengezogen. Dabei bewegen sich die Enden bogenförmig in Pfeilrichtung P und können damit in Eingriff oder außer Eingriff mit den zu greifenden Baustoffelementen gebracht werden.

In einer anderen Ausführung können auch zwei Stellzylinder vorgesehen werden, die von einer senkrecht von der Quertraversenanordnung 20a abstehenden Zwischenstütze ausgehend, jeweils unabhängig voneinander auf die Halteelemente 1a wirken.

Fig. 4B zeigt eine alternative Ausführung, bei welcher der Stellzylinder 22 nicht direkt auf die Halteelemente 1a und in deren Verstellrichtung wirkt, sondern über ein zwischen den Halteelementen 1a angeordnetes Zugelement 23.

In einer anderen (nicht dargestellten Ausführung) kann das in Figur 4B dargestellte flexible Zugelement 23 alternativ als starres Gestänge ausgebildet werden, das als angelenktes Getriebe zwischen dem Anlenkpunkt 24 zum Stellzylinder 22 auch Druckkräfte über die Anlenkpunkte 25 auf die Halteelemente 1a übertragen kann. Mit so einer Anordnung ist es möglich, die Halteelemente 1a über den Stellzylinder 22 sowohl zusammenzuziehen, als auch auseinanderzudrücken.

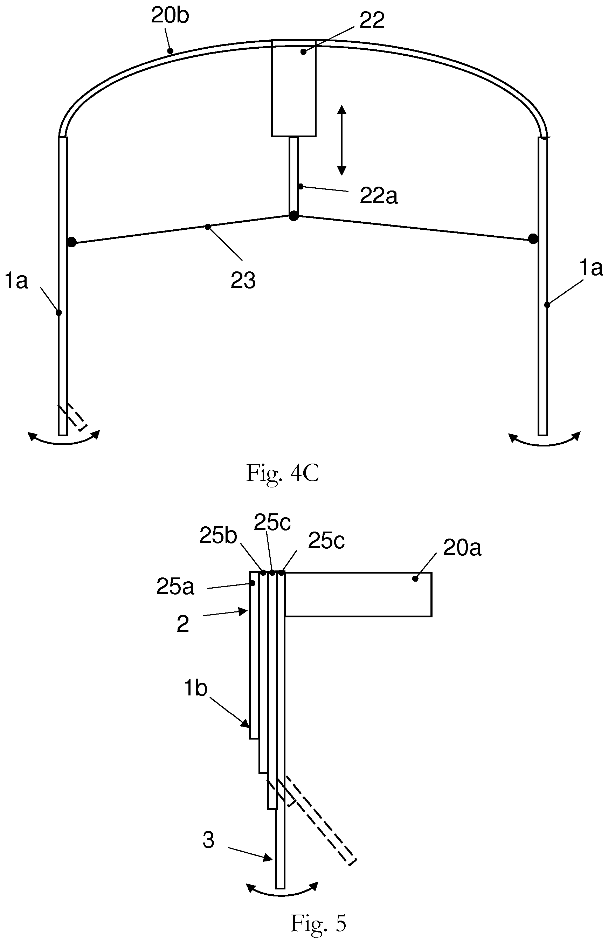

Es gibt auch Ausführungen, bei denen diese elastische Verformung durch eine gewisse Eigenelastizität (Biegeelastizität) der Quertraversenanordnung 20a unterstützt wird. Eine Ausführung, bei der dies verstärkt realisiert ist, zeigt die Figur 4C, bei der die Quertraversenanordnung 20b als elastischer Bogen ausgebildet ist, der über den Wirkmechanismus, der in Zusammenhang mit der Fig. 4B oben beschrieben ist, angelenkt wird. Beim Ein- und Ausfahren des Stellkolbens 22a verbiegt sich hier der elastische Bogen 20b entweder in der Weise, dass sich die Enden der Halteelemente 1a aufeinander zubewegen (zusammenziehen/greifen) oder auseinander bewegen (öffnen/freigeben). Dabei gibt es Ausführungen, bei denen Halteelemente 1a und Stellbogen 20b integral bzw. einstückig ausgebildet sind und insbesondere auch aus einem faserverstärkten Kunststoff.

In den Figuren Fig. 4A bis 4C sind optional (gestrichelte Darstellung) Halteelemente 1a mit einer Kröpfung am Ende dargestellt, die sich beim Greifen der aufzunehmenden Gegenstände (bspw. eines oder mehrerer Baustoffelemente) elastisch an die Außenflächen der Baustoffelement anschmiegen. Dadurch kann die Kontaktfläche, welche zusammen mit der aufgebrachten Kraft maßgeblich für die Wirksamkeit des Reibschlusses zwischen dem Halteelement 1a und einem aufzunehmenden Gegenstand ist, vergrößert werden.

Fig. 5 zeigt den Aufbau eines aus mehreren Lamellen 25a-d aufgebauten Halteelements 1b, die bspw. miteinander verklebt sind oder auf andere Weise fest aneinander gefügt bzw. integral miteinander ausgebildet sind. Dabei nimmt die Biegesteifigkeit vom Haltebereich 3 am freien Ende des Halteelements 1b zum Befestigungsbereich 2 am Ende des Haltelements 1b, das mit der Quertraversenanordnung 20a gekoppelt ist, zu. Auch hier ist ein alternativer, gekröpft angeordneter Haltebereich durch die gestrichelte Darstellung angedeutet. Auf diese Weise kann der oben beschriebene Anschmiegeffekt an den aufzunehmenden Gegenstand noch weiter verstärkt werden. So können gegebenenfalls die auf die Halteelemente 1b aufzubringenden Kräfte, die über den Stellzylinder 22 aufgebracht werden müssen, weiter verringert werden, um (über die verbesserte Reibwirkung) so eine hinreichende Haltekraft aufzubringen.

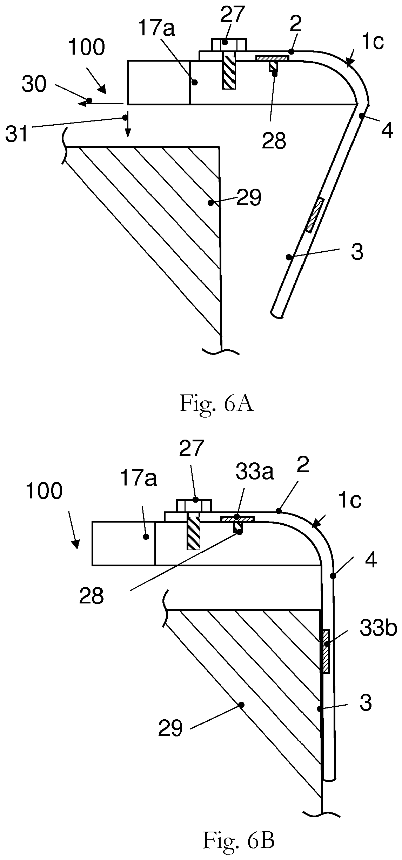

Die Fig. 6A bis 7B zeigen eine schematische Teildarstellung einer Baustoffgreiferanordnung 100 mit einer Halteschiene 17a mit einem gekröpften Halteelement 1d, das über eine Schraubverbindung 27 mit der Halteschiene 17a verbunden ist. Zwischen der Halteschiene 17a und dem waagerecht verlaufenden Abschnitt des Halteelements 1c, der im entspannten Zustand des Halteelements 1c an der Oberseite der Halteschien 17a anliegt, ist eine Sensoranordnung angeordnet, die hier einen Kontaktsensor 28 umfasst, welcher das Anliegen des Halteelements 1c an der Oberseite der Halteschiene 17a detektiert.

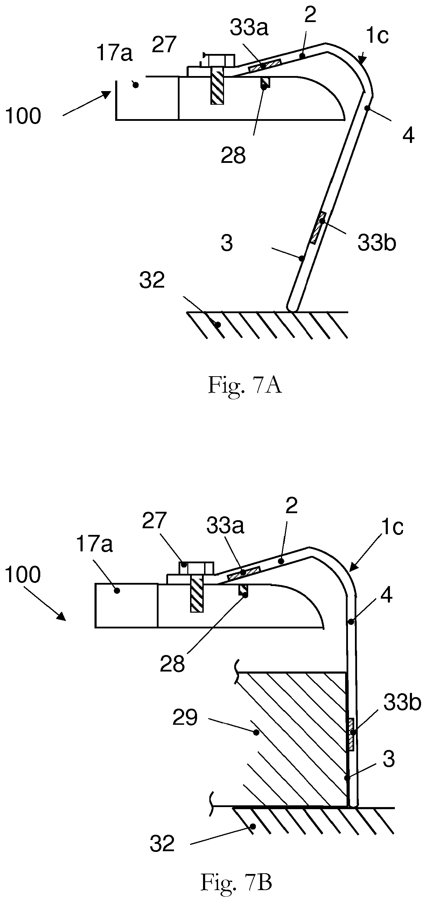

Die Sensoranordnung 28 ist so ausgebildet, dass sie kollisionsbedingte bzw. eine betriebsbedingte Verformung des Halteelements 1c erfasst. Dies zeigen die Darstellungen in den Figuren 6A, 6B, 7A und 7B.

Fig. 6A zeigt das Halteelement 1c in seinem Ruhezustand, in dem es kein Baustoffelement erfasst. Bewegt sich nun die Halteschiene 17a in Pfeilrichtung 30, legt sich der Haltebereich 3 an das Baustoffelement 29 an. Dabei verformt sich das Halteelement 1c elastisch. Die Elastizität des Befestigungsbereichs 2, des Biegebereichs 4 und des Haltebereichs 3 ist dabei so eingestellt, dass der Befestigungsbereich 2 (der auf der Halteschiene 17a aufliegende Bereich) bei der Verformung des Biegebereichs 4 bzw. des Haltebereichs 3 auf der Oberseite der Halteschiene 17a liegen bleibt - sich also nicht oder nur minimal verformt. Die der Sensor 28 erfasst diese Lage.

Bewegt sich jedoch die Halteschiene 17a mit dem Haltelement 1c in Bewegungsrichtung 31 senkrecht nach unten, so nimmt die Anordnung die in Fig. 7A bzw. 7B dargestellte Stellung ein. Das untere Ende des Halteelements 1c setzt bspw. auf einer Unterlage 32 oder einem Gegenstand auf. Dabei wird das Halteelement 1c so verformt, dass sich der Befestigungsbereich 2 (im Normalzustand auf der Halteschiene 17a aufliegend und die Sensoreinrichtung kontaktierend) von der Halteschiene löst, so dass der Sensor 28, der bspw. als Kontaktsensor ausgebildet ist, diesen Kollisionszustand erfasst und gegebenenfalls ein Kollisionssignal abgibt. Das Gleiche passiert mit einem eingespannten Bauelement 29, das auf einer Unterlage 32 abgesetzt wird und dabei die Verfahrbewegung nicht rechtzeitig gestoppt wird. Die Sensoranordnung (bzw. der dargestellte Kontaktsensor 28) ist also zum einen in der Lage, eine Kollisionsbewegung (s. Fig. 7A) zu detektieren und an eine Steuerung zu signalisieren, die daraufhin eine Verfahrbewegung sofort stoppen kann. Zum anderen ist es aber auch möglich, einen Absetzzustand zu erfassen und daraufhin die Verfahrbewegung zu unterbrechen bzw. zu stoppen (vgl. in der Darstellung 7B).

In einer optionalen Ausführung ist im Halteelement 1c selbst eine Sensoranordnung vorgesehen, die bspw. zwei Dehnmessstreifen 33 am Halteelement 1c umfasst. Ein erster Dehnmessstreifen 33a ist im Befestigungsbereich 2 des Halteelements 1c angeordnet und ein zweiter Dehnmessstreifen ist im Haltebereich 3 oder im Biegebereich 4 des Haltelements 1c angeordnet. Dabei erfasst der Dehnmessstreifen 33a im Befestigungsbereich 2 die in den Figuren 7A und 7B dargestellte Verformung des Halteelements 1c und so einen Kollisions- bzw. Absetzzustand.

Der Dehnmesstreifen 33b im Haltebereich 3 bzw. im Biegebereich 4 erfasst dagegen die betriebsbedingte Verformung des Halteelements 1c beim Aufnehmen eines Baustoffelements 29 (vgl. Fig. 6B und 7B).

Eine solche Sensoranordnung kann daher sowohl eine kollisionsbedingte als auch eine betriebsbedingte Verformung des Halteelements 1c erfassen. Insbesondere das schnelle Erfassen einer kollisionsbedingten Verformung verhindert eine Beschädigung der Baustoffgreiferanordnung 100 und damit insbesondere auch der Haltelemente 1c.

Geeignete Sensoren können Schalter, Kontaktsensoren, Näherungssensoren, Verformungssensoren, Kraftmesssensoren und die oben dargestellten Dehnmessstreifen 33a, 33b sein. Dabei gibt es auch geeignete Sensoranordnungen, die für die in den Figuren 1 - 5 dargestellten Halteelemente bzw. Baustoffgreiferanordnungen geeignet sind und sowohl betriebsbedingte als auch kollisionsbedingte Verformungen der Halteelemente erfassen können und detektierbar machen. Dies kann entweder durch Sensoranordnungen mit mehreren Sensoren erfolgen, die an unterschiedlichen Orten angeordnet sind, oder durch Einzelsensoren die abhängig von einem Signalpegel betriebsbedingte (normale) oder kollisionsbedingte (außerordentliche) Verformungen der Halteelemente anzeigen.

Der oder die Sensoren können an den Halteelementen selbst und/oder an belasteten Bauteilen der Greiferanordnung angeordnet sein.

Folgende Merkmale und Ausführungen (a) bis (m) sind untereinander beliebig kombinierbar, soweit technisch möglich:
(a) Haltelement 1; 1`, 1a, 1b, 1c mit einem aus einem plattenförmigen FVK-Werkstoff ausgebildeten Laschenkörper mit einem Befestigungsbereich 2 an dem der Laschenkörper an einer Trägervorrichtung 17 fixierbar ist und einem Haltebereich 3 über den eine Haltekraft auf einen zu haltenden Gegenstand aufbringbar ist, wobei
zwischen dem Befestigungsbereich 2 und dem Haltebereich 3 ein Biegebereich 4 ausgebildet ist, in dem der Laschenkörper bei auf den zu haltenden Gegenstand aufgebrachter Haltekraft elastisch verformbar ist.
(a1) Haltelement 1; 1`, 1a, 1b mit einem aus einem plattenförmigen FVK-Werkstoff ausgebildeten Laschenkörper mit einem an einer Flachseite des Laschenkörpers ausgebildeten Befestigungsbereich 2 an dem der Laschenkörper an einer Trägervorrichtung 17 fixierbar ist und einem an der Flachseite ausgebildeten Haltebereich 3, über den eine Haltekraft auf einen zu haltenden Gegenstand aufbringbar ist, wobei
zwischen dem Befestigungsbereich 2 und dem Haltebereich 3 ein Biegebereich 4 ausgebildet ist, in dem der Laschenkörper bei auf den zu haltenden Gegenstand aufgebrachter Haltekraft elastisch verformbar ist.
(b) Halteelement 1; 1`, 1a, 1b, 1c, wobei der Biegebereich 4 gegenüber dem Befestigungsbereich 2 und/oder dem Haltebereich 3 eine reduzierte Biegesteifigkeit aufweist.
(c) Halteelement 1; 1', 1a, 1b, 1c, wobei der Biegebereich 4 gegenüber einer Wandstärke so des Befestigungsbereichs 2 und/oder des Haltebereichs 3 eine reduzierte Wandstärke si aufweist.
(d) Halteelement 1; 1`, 1a, 1b, 1c, bei welchem der Biegebereich 4 gegenüber dem Befestigungsbereich 2 und/oder dem Haltebereich 3 einen reduzierten Faseranteil und/oder eine veränderte Faserstruktur aufweist.
(e) Halteelement 1; 1`, 1a, 1b, 1c, bei welchem zwischen dem Befestigungsbereich 2 und dem Haltebereich 3 eine Kröpfung 7 ausgebildet ist, insbesondere im Biegebereich 4, so dass der Befestigungsbereich 2 zum Haltebereich 3 geneigt angeordnet ist.
(f) Halteelement 1; 1', 1a, 1b, 1c, bei welchem der FVK-Werkstoff ein Hochleistungsverbundkunststoff mit gerichteter Faserstruktur ist, der insbesondere als Organoblech ausgebildet ist.
(g) Greiferanordnung 100, 100a, 100b zum Umschlag einer Baustoffelementlage mit wenigstens einem Halteelement 1; 1`, 1a, 1b, 1c mit wenigstens einem der Merkmale (a) bis (f).
(h) Greiferanordnung 100, 100a, 100b, mit einer ersten und einer zweiten Haltelement-anordnung 1; 1', 1a, 1b,1c, 17 die mittels einer Stellvorrichtung 18, 22, 22a, 23 zwischen einer Halte- und einer Freigabestellung verstellbar sind, wobei in der Haltestellung über die Haltelemente 1; 1`, 1a, 1b, 1c durch deren elastische Verformung eine Haltekraft auf eine Baustoffanordnung ausübbar ist, so dass Halteelemente 1; 1`, 1a, 1b, 1c und Baustoffanordnung reib- und/oder formschlüssig koppelbar sind.
(i) Greiferanordnung 100, 100a, 100b, wobei die Stellvorrichtung 18, 22, 22a, 23 über eine elastische Verformung der Haltelemente 1; 1`, 1a, 1b, 1c insbesondere durch Spannen der Haltelemente 1; 1`, 1a, 1b, 1c die Freigabestellung einstellt.
(k) Greiferanordnung 100, 100a, 100b, wobei die Stellvorrichtung 18, 22, 22a, 23 über eine elastische Verformung der Haltelemente 1; 1`, 1a, 1b, 1c insbesondere durch Spannen der Haltelemente 1; 1`, 1a, 1b, 1c die Haltestellung einstellt.
(l) Greiferanordnung (100, 100a, 100b), wobei eine Sensoranordnung mit wenigstens einem der Halteelemente 1; 1`, 1a, 1b, 1c zusammenwirkt, die dazu eingerichtet ist eine kollisionsbedingte und/oder eine betriebsbedingte Verformung des Halteelements 1; 1`, 1a, 1b, 1c zu erfassen.
(m) Greiferanordnung (100, 100a, 100b), wobei die Sensoranordnung einen Sensor 28; 33a, 33b aus der Gruppe folgender Sensoren umfasst: Schalter, Kontaktsensor, Näherungssensor, Verformungssensor, Dehnungsmessstreifen, Kraftmesssensor.

Die Greiferanordnungen sind insbesondere als Baustoffgreiferanordnungen ausgebildet, sie könne aber auch als Greiferanordnungen für andere Transport-/Umschlagstücke ausgebildet sein, die einzeln oder lagenweise umgeschlagen oder umgesetzt werden sollen. Dies können z.B. Werkstücke, Halbzeuge, Packeinheiten oder ähnliches sein.

Weitere Ausführungen und Variationen der Erfindung ergeben sich für den Fachmann im Rahmen der Ansprüche.

**BEZUGSZEICHENLISTE**

| | | | |
|---|---|---|---|
| 1, 1', 1a, 1b, 1c | Halteelement | 20a | Quertraversenanordnung |
| 2 | Befestigungsbereich | 20b | elastischer Bogen |
| 3 | Haltebereich | 21 | Anschlussplatte |
| 4 | Biegebereich | 22 | Stellzylinder/Stellvorrichtung |
| 5 | Bohrungen | 22a | Stellkolben |
| 6 | Bohrungen | 23 | Zugelement |
| 7 | Knick/Kröpfung | 24, 25 | Anlenkpunkt |
| 8 | Haltekante | 25a-25d | Lamellen |
| 9 | Bereich im Befestigungsbereich | 27 | Schraubverbindung |
| 10 | Bereich im Biegebereich | 28 | Sensoreinrichtung |
| 11 | Bereich im Haltebereich | 28A | Dehnmessstreifen |
| 12 | Faser | 28B | Dehnmessstreifen |
| 13 | Rillen | 29 | Baustoffelement |
| 14 | Vertiefungen/Mulden | 30 | Bewegungsrichtung |
| 15 | Einschnitt | 31 | Bewegungsrichtung |
| 16 | Haltefinger | 32 | Unterlage |
| 17 | Winkelschiene | 100, 100a, 100b | Baustoffgreiferanordnung |
| 17A | Halteschiene | | |
| 18 | Rollenschuh/Stellvorrichtung | | |
| 19 | Führungsschiene | | |
| 20 | Quertraverse | | |

## Patentansprüche

1. Haltelement (1; 1`, 1a, 1b) mit einem aus einem plattenförmigen FVK-Werkstoff ausgebildeten Laschenkörper mit einem an einer Flachseite des Laschenkörpers ausgebildeten Befestigungsbereich (2) an dem der Laschenkörper an einer Trägervorrichtung (17) fixierbar ist und einem an der Flachseite ausgebildeten Haltebereich (3), über den eine Haltekraft auf einen zu haltenden Gegenstand aufbringbar ist, wobei
zwischen dem Befestigungsbereich (2) und dem Haltebereich (3) ein Biegebereich (4) ausgebildet ist, in dem der Laschenkörper bei auf den zu haltenden Gegenstand aufgebrachter Haltekraft elastisch verformbar ist, und wobei der Biegebereich (4) gegenüber dem Befestigungsbereich (2) und/oder dem Haltebereich (3) eine reduzierte Biegesteifigkeit aufweist.

2. Halteelement (1; 1', 1a, 1b) nach Anspruch 1, wobei der Biegebereich (4) gegenüber einer Wandstärke (s₀) des Befestigungsbereichs (2) und/oder des Haltebereichs (3) eine reduzierte Wandstärke (s₁) aufweist.

3. Halteelement (1; 1', 1a, 1b) nach Anspruch 1 oder 2, bei welchem der Biegebereich (4) gegenüber dem Befestigungsbereich (2) und/oder dem Haltebereich (3) einen reduzierten Faseranteil und/oder eine veränderte Faserstruktur aufweist.

4. Halteelement (1; 1', 1a, 1b) nach einem der vorhergehenden Ansprüche, bei welchem zwischen dem Befestigungsbereich (2) und dem Haltebereich (3) eine Kröpfung (7) ausgebildet ist, insbesondere im Biegebereich (4), so dass der Befestigungsbereich (2) zum Haltebereich (3) geneigt angeordnet ist.

5. Halteelement (1; 1', 1a, 1b) nach einem der vorhergehenden Ansprüche, bei welchem der FVK-Werkstoff ein Hochleistungsverbundkunststoff mit gerichteter Faserstruktur ist, der insbesondere als Organoblech ausgebildet ist.

6. Greiferanordnung (100, 100a, 100b), insbesondere Baustoffgreiferanordnung, zum Umschlag einer Baustoffelementlage mit wenigstens einem Halteelement (1; 1`, 1a, 1b) nach einem der vorhergehenden Ansprüche.

7. Greiferanordnung (100, 100a, 100b) nach Anspruch 6, mit einer ersten und einer zweiten Haltelement-anordnung (1; 1`, 1a, 1b 17) die mittels einer Stellvorrichtung (18, 22, 22a, 23) zwischen einer Halte- und einer Freigabestellung verstellbar sind, wobei in der Haltestellung über die Haltelemente (1; 1`, 1a, 1b) durch deren elastische Verformung eine Haltekraft auf eine Baustoffanordnung ausübbar ist, so dass Halteelemente (1; 1`, 1a, 1b) und Baustoffanordnung reib- und/oder formschlüssig koppelbar sind.

8. Greiferanordnung (100, 100a, 100b) nach Anspruch 7, wobei die Stellvorrichtung (18, 22, 22a, 23) über eine elastische Verformung der Haltelemente (1; 1`, 1a, 1b), insbesondere durch Spannen der Haltelemente (1; 1`, 1a, 1b), die Freigabestellung einstellt.

9. Greiferanordnung (100, 100a, 100b) nach Anspruch 7, wobei die Stellvorrichtung (18, 22, 22a, 23) über eine elastische Verformung der Haltelemente (1; 1`, 1a, 1b), insbesondere durch Spannen der Haltelemente (1; 1`, 1a, 1b), die Haltestellung einstellt.

10. Greiferanordnung (100, 100a, 100b) nach einem der Ansprüche 6 bis 9, wobei eine Sensoranordnung mit wenigstens einem der Halteelemente (1; 1', 1a, 1b, 1c) zusammenwirkt, die dazu eingerichtet ist eine kollisionsbedingte und/oder eine betriebsbedingte Verformung des Halteelements (1; 1', 1a, 1b, 1c) zu erfassen.

11. Greiferanordnung (100, 100a, 100b) nach Anspruch 10, wobei die Sensoranordnung einen Sensor (28; 33a, 33b) aus der Gruppe folgender Sensoren umfasst: Schalter, Kontaktsensor, Näherungssensor, Verformungssensor, Dehnungsmessstreifen.

## Claims

1. A holding element (1; 1', 1a, 1b) having a lug body formed from a plate-shaped FRP material and having a fastening region (2) which is formed on a flat side of the lug body and at which the lug body can be fixed to a carrier device (17), and having a holding region (3) which is formed on the flat side and via which a holding force can be applied to an object to be held, wherein
a bending region (4) is formed between the fastening region (2) and the holding region (3), in which bending region the lug body is elastically deformable when a holding force is applied to the object to be held, and wherein
the bending region (4) has a bending strength that is reduced compared to the fastening region (2) and/or the holding region (3).

2. The holding element (1; 1', 1a, 1b) according to claim 1, wherein the bending region (4) has a wall thickness (s₁) that is reduced compared to a wall thickness (s₀) of the fastening region (2) and/or the holding region (3).

3. The holding element (1; 1', 1a, 1b) according to claim 1 or 2, in which the bending region (4) has a reduced fiber content and/or a modified fiber structure compared to the fastening region (2) and/or the holding region (3).

4. The holding element (1; 1', 1a, 1b) according to any one of the preceding claims, in which a cranking (7) is formed between the fastening region (2) and the holding region (3), in particular in the bending region (4), so that the fastening region (2) is arranged so as to be inclined towards the holding region (3).

5. The holding element (1; 1', 1a, 1b) according to any one of the preceding claims, in which the FRP material is a high-performance composite plastic material having a directed fiber structure, which is formed in particular as an organic sheet.

6. A gripper assembly (100, 100a, 100b), in particular material gripper assembly, for handling a material element layer with at least one holding element (1; 1', 1a, 1b) according to any one of the preceding claims.

7. The gripper assembly (100, 100a, 100b) according to claim 6, comprising a first and a second holding element assembly (1; 1', 1a, 1b 17) which can be adjusted between a holding position and a release position by means of an adjusting device (18, 22, 22a, 23), wherein, in the holding position, a holding force can be exerted to a material assembly via the holding elements (1; 1', 1a, 1b) by means of the elastic deformation thereof so that holding elements (1; 1', 1a, 1b) and material assembly can be coupled in a frictional and/or form-fitting manner.

8. The gripper assembly (100, 100a, 100b) according to claim 7, wherein the adjusting device (18, 22, 22a, 23) sets the release position via an elastic deformation of the holding elements (1; 1', 1a, 1b), in particular by tensioning the holding elements (1; 1', 1a, 1b).

9. The gripper assembly (100, 110a, 100b) according to claim 7, wherein the adjusting device (18, 22, 22a, 23) sets the holding position via an elastic deformation of the holding elements (1; 1', 1a, 1b), in particular by tensioning the holding elements (1; 1', 1a, 1b).

10. The gripper assembly (100, 100a, 100b) according to any one of claims 6 to 9, wherein a sensor assembly interacts with at least one of the holding elements (1; 1', 1a, 1b, 1c) which sensor assembly is designed to detect a collision-induced and/or operation-induced deformation of the holding element (1; 1', 1a, 1b, 1c).

11. The gripper assembly (100, 100a, 100b) according to claim 10, wherein the sensor assembly comprises a sensor (28; 33a, 33b) from the group of the following sensors: switch, contact sensor, proximity sensor, deformation sensor, strain gage.

## Revendications

1. Elément de maintien (1 ; 1', 1a, 1b) avec un corps de languette formé d'une matière plastique renforcée de fibres (FRP) en forme de plaque avec une zone de fixation (2) formée sur un côté plat du corps de languette sur laquelle le corps de languette peut être fixé sur un dispositif de support (17) et une zone de maintien (3) formée sur le côté plat, par laquelle une force de maintien peut être appliquée sur un objet à maintenir, où
une zone de flexion (4) est formée entre la zone de fixation (2) et la zone de maintien (3), dans laquelle le corps de la languette peut être déformé élastiquement en cas de force de maintien appliquée sur l'objet à maintenir, et où
la zone de flexion (4) présente une rigidité à la flexion réduite par rapport à la zone de fixation (2) et/ou à la zone de maintien (3).

2. Elément de maintien (1 ; 1', 1a, 1b) selon la revendication 1, dans lequel la zone de flexion (4) présente une épaisseur de paroi (s₁) réduite par rapport à une épaisseur de paroi (s₀) de la zone de fixation (2) et/ou de la zone de maintien (3).

3. Elément de maintien (1 ; 1', 1a, 1b) selon la revendication 1 ou 2, dans lequel la zone de flexion (4) présente une teneur en fibres réduite et/ou une structure de fibres modifiée par rapport à la zone de fixation (2) et/ou à la zone de maintien (3).

4. Elément de maintien (1 ; 1', 1a, 1b) selon l'une des revendications précédentes, dans lequel est formé un coude (7) entre la zone de fixation (2) et la zone de maintien (3), en particulier dans la zone de flexion (4), de sorte que la zone de fixation (2) est disposée de manière inclinée par rapport à la zone de maintien (3).

5. Elément de maintien (1 ; 1', 1a, 1b) selon l'une des revendications précédentes, dans lequel la matière plastique renforcée de fibres (FRP) est un plastique composite à haute performance avec une structure orientée de fibres, qui est conçu en particulier sous forme de tôle organique.

6. Dispositif de préhension (100, 100a, 100b), en particulier dispositif de préhension de matériaux de construction, pour le rabattement d'une couche d'élément de matériau de construction avec au moins un élément de maintien (1 ; 1', 1a, 1b) selon l'une des revendications précédentes.

7. Dispositif de préhension (100, 100a, 100b) selon la revendication 6, avec un premier et un second dispositif d'élément de maintien (1 ; 1', 1a, 1b 17) qui peuvent être ajustés au moyen d'un dispositif de réglage (18, 22, 22a, 23) entre une position de maintien et une position de libération, dans lequel, dans la position de maintien, une force de maintien peut être exercée sur un agencement de matériau de construction via les éléments de maintien (1 ; 1', 1a, 1b), par leur déformation élastique, de sorte que les éléments de maintien (1 ; 1', 1a, 1b) et l'agencement de matériau de construction peuvent être couplés par friction et/ou par engagement positif.

8. Dispositif de préhension (100, 100a, 100b) selon la revendication 7, dans lequel le dispositif de réglage (18, 22, 22a, 23) règle la position de libération par l'intermédiaire d'une déformation élastique des éléments de maintien (1 ; 1', 1a, 1b), en particulier par mise sous tension des éléments de maintien (1 ; 1', 1a, 1b).

9. Dispositif de préhension (100, 100a, 100b) selon la revendication 7, dans lequel le dispositif de réglage (18, 22, 22a, 23) règle la position de maintien par l'intermédiaire d'une déformation élastique des éléments de maintien (1 ; 1', 1a, 1b), en particulier par mise sous tension des éléments de maintien (1 ; 1', 1a, 1b).

10. Dispositif de préhension (100, 100a, 100b) selon l'une quelconque des revendications 6 à 9, dans lequel un dispositif de détection coopère avec au moins un des éléments de maintien (1 ; 1', 1a, 1b, 1c) et est configuré pour détecter une déformation de l'élément de maintien (1 ; 1', 1a, 1b, 1c) due à une collision et/ou au fonctionnement.

11. Dispositif de préhension (100, 100a, 100b) selon la revendication 10, dans lequel le dispositif de détection comprend un capteur (28 ; 33a, 33b) choisi dans le groupe des capteurs suivants : commutateur, capteur de contact, capteur de proximité, capteur de déformation, jauge de contrainte.
